Europäisches Patentamt

European Patent Office

Office européen des brevets

(19)

(11) **EP 1 211 228 A1**

(12) **EUROPEAN PATENT APPLICATION**
published in accordance with Art. 158(3) EPC

(43) Date of publication:
**05.06.2002 Bulletin 2002/23**

(21) Application number: **00942422.7**

(22) Date of filing: **30.06.2000**

(51) Int Cl.⁷: **C03B 37/027**, C03B 37/029

(86) International application number:
**PCT/JP00/04353**

(87) International publication number:
**WO 01/02312 (11.01.2001 Gazette 2001/02)**

(84) Designated Contracting States:
**AT BE CH CY DE DK ES FI FR GB GR IE IT LI LU MC NL PT SE**

(30) Priority: **05.07.1999 JP 19034399**

(71) Applicant: **Sumitomo Electric Industries, Ltd.
Osaka-shi, Osaka 541-0041 (JP)**

(72) Inventors:
• **ISHIHARA, Tomohiro Yokohama Works
Sakae-ku Yokohama-shi
Kanagawa 244-8588 (JP)**

• **SAITO, Tatsuhiko Yokohama Works
Sakae-ku Yokohama-shi
Kanagawa 244-8588 (JP)**
• **OHGA, Yuichi Yokohama Works
Sakae-ku Yokohama-shi
Kanagawa 244-8588 (JP)**

(74) Representative: **Grünecker, Kinkeldey,
Stockmair & Schwanhäusser Anwaltssozietät
Maximilianstrasse 58
80538 München (DE)**

(54) **OPTICAL FIBER DRAWING METHOD AND DRAWING DEVICE**

(57)     A drawing apparatus 1 has a drawing furnace 11 for heating and drawing an optical fiber preform 2, and a carbon heater 13 is disposed in this drawing furnace 11. The carbon heater 13 has a heating portion the length of which in a drawing direction is set to not less than 280 mm. The carbon heater 13 heats the preform so that a maximum temperature on the surface of the optical fiber preform 2 in the drawing furnace 11 becomes below 1800°C. The optical fiber preform 2 is drawn in a state in which the temperature of the muffle tube 12 of the drawing furnace 11 is kept below 1800°C, so that atomic arrangement in the optical fiber preform 2 becomes relatively aligned in a state of reduced randomness of atomic arrangement. This permits the optical fiber 3 to be drawn as reflecting the reduced randomness state of atomic arrangement, whereby the optical fiber 3 can be obtained with reduced Rayleigh scattering intensity and lowered transmission loss.

**Fig.1**

## Description

## Technical Field

The present invention relates to methods and apparatus for drawing an optical fiber whose transmission loss is lowered by reducing Rayleigh scattering intensity.

## Background Art

For example, the method described in Japanese Patent Application Laid-Open No. H04-59631 is known as a method of drawing an optical fiber with transmission loss lowered by reduction of Rayleigh scattering intensity. This drawing method is a method of placing a heating furnace immediately below a drawing furnace and reheating an optical fiber drawn as heated in the heating furnace. The reheating of the heated and drawn optical fiber prevents the optical fiber from being rapidly cooled from a high temperature state and thus decreases a virtual temperature (a temperature corresponding to randomness of atomic arrangement states in glass), thereby reducing the Rayleigh scattering intensity.

## Disclosure of invention

In the drawing method of the optical fiber as described in Japanese Patent Application Laid-Open No. H04-59631, however, since the equipment structure includes the extra heating furnace added immediately below the drawing furnace, the equipment cost soars. The addition of the reheating step of optical fiber also results in complicating a series of drawing steps of heating and drawing an optical fiber preform and coating an optical fiber thus drawn, with resin.

The present invention has been accomplished in view of the above-stated points and a first object of the invention is thus to provide fiber drawing methods by which an optical fiber with reduced Rayleigh scattering intensity and thus lowered transmission loss can be drawn without a rise of equipment cost and in a simple manner.

A second object of the invention is to provide fiber drawing apparatus by which an optical fiber with reduced Rayleigh scattering intensity and thus lowered transmission loss can be drawn without a rise of equipment cost and in a simple manner.

Meanwhile, the inventors have conducted intensive and extensive research on the fiber drawing apparatus and drawing methods capable of lowering the transmission loss without a rise of equipment cost and in a simple manner and found the new fact as described below about the relation between Rayleigh scattering intensity and temperature of the optical fiber preform during drawing.

In glass at high temperatures atoms vigorously oscillate because of thermal energy and atomic arrangement thereof is in a random state as compared with glass at low temperatures. For this reason, the higher the temperature of the optical fiber preform during drawing, the more random the atomic arrangement of glass becomes. Further, since the optical fiber is made by being drawn in the form reflecting the random state of the atomic arrangement, the atomic arrangement of the optical fiber thus drawn also becomes random, so as to increase a Rayleigh scattering loss. The Rayleigh scattering loss (I) possesses the property of inverse proportion to the fourth power of wavelength (λ) as indicated by Eq (1) below, and the coefficient A in this equation is defined as a Rayleigh scattering coefficient.

$$I = A/\lambda^4 \qquad (1)$$

It was found from these results that decrease in the temperature of the optical fiber preform during drawing brought the atomic arrangement in the optical fiber preform into a relatively aligned state with reduced randomness, the preform was drawn in the form reflecting the reduced randomness state of the atomic arrangement to yield the optical fiber, and this was able to reduce the Rayleigh scattering intensity of the optical fiber drawn and thus lower the transmission loss.

Based on such research results, in order to accomplish the first object described above, a drawing method of optical fiber according to the present invention is a fiber drawing method of heating and drawing an optical fiber preform by making use of a drawing furnace comprising a muffle tube into which the optical fiber preform is supplied, wherein the optical fiber preform is drawn in a state in which a temperature of the muffle tube is kept below 1800°C.

Since the optical fiber preform is drawn in the state in which the temperature of the muffle tube is kept below 1800°C, the maximum temperature on the surface of the optical fiber preform during drawing is lowered to below 1800°C, which is lower than that in the prior art, and the atomic arrangement in the optical fiber preform is in the relatively aligned state with reduced randomness of atomic arrangement. Accordingly, the optical fiber is drawn in the form reflecting this reduced randomness state of atomic arrangement, so that the optical fiber can be gained with reduced Rayleigh scattering intensity and lowered transmission loss. As a consequence, since the Rayleigh scattering intensity is reduced by controlling the temperature of the optical fiber preform during drawing, there is no need for the reheating step with the heating furnace as in the aforementioned prior art, which permits the optical fiber with reduced transmission loss to be made without a rise of equipment cost and in a simple manner.

In the drawing method of optical fiber according to the present invention, the optical fiber preform may be drawn, using as the drawing furnace, a drawing furnace comprising a heater a length of a heating portion of which in a drawing direction is not less than eight times a diameter of the optical fiber preform.

Since the optical fiber preform is drawn in the state in which the temperature of the muffle tube is kept below 1800°C, the maximum temperature on the surface of the optical fiber preform during drawing is lowered to below 1800°C lower than that in the prior art and the viscosity increases in the optical fiber preform in a molten state, which can make it hard to draw the optical fiber preform into a desired diameter of optical fiber. However, when the optical fiber preform is drawn using the drawing furnace comprising the heater the length of the heating portion of which in the drawing direction is not less than eight times the diameter of the optical fiber preform, the optical fiber preform can be readily drawn into the desired diameter of optical fiber even in the high viscosity state of the optical fiber preform in the molten state.

Another drawing method of optical fiber according to the present invention is a fiber drawing method of heating and drawing an optical fiber preform by making use of a drawing furnace, wherein the optical fiber preform is drawn so that in the drawing furnace a taper angle of a meniscus portion of the optical fiber preform becomes not more than 19°.

Since the optical fiber preform is heated and drawn so that the taper angle of the meniscus portion of the optical fiber preform becomes not more than 19°, the atomic arrangement becomes relatively aligned in the state of reduced randomness of atomic arrangement in the meniscus portion of the optical fiber preform thus drawn. Accordingly, the optical fiber is made as reflecting this state of reduced randomness of atomic arrangement, so that the optical fiber can be obtained with reduced Rayleigh scattering intensity and lowered transmission loss. This results in obviating the necessity for the reheating step with the heating furnace as employed in the foregoing prior art, so that the optical fiber with reduced transmission loss can be obtained without a rise of equipment cost and in a simple manner.

In order to accomplish the second object described above, a drawing apparatus of optical fiber according to the present invention is a fiber drawing apparatus comprising a drawing furnace for heating and drawing an optical fiber preform, wherein the drawing furnace comprises a muffle tube into which the optical fiber preform is supplied, and a heater disposed around an outer periphery of the muffle tube and arranged to heat a predetermined longitudinal range of the optical fiber preform, and wherein a length of a heating portion of the heater in a drawing direction is not less than six times a diameter of an inner periphery of the muffle tube.

When the temperature of the optical fiber preform during drawing is lowered as compared with that in the prior art in order to obtain the optical fiber with reduced Rayleigh scattering intensity and lowered transmission loss, the viscosity becomes higher in the optical fiber preform in the molten state, which can make it hard to draw the optical fiber preform into a desired diameter of the optical fiber. However, when the length of the heating portion of the heater in the drawing direction is not less than six times the diameter of the inner periphery of the muffle tube, the optical fiber preform can be readily drawn into the desired diameter of the optical fiber even in the high viscosity state of the optical fiber preform in the molten state.

The drawing apparatus of optical fiber according to the present invention may also be constructed so that the heater includes a plurality of heaters arranged in series along the drawing direction and the sum of lengths of heating portions of the heaters in the drawing direction is not less than six times the diameter of the inner periphery of the muffle tube.

When the heater includes a plurality of heaters arranged in series along the drawing direction, it becomes feasible to readily expand the heating range of the optical fiber preform. Of course, when the sum of the lengths of the heating portions of the heaters in the drawing direction is not less than six times the diameter of the inner periphery of the muffle tube, the optical fiber preform can be readily drawn into the desired diameter of the optical fiber even in the high viscosity state of the optical fiber preform in the molten state.

In the drawing apparatus of optical fiber according to the present invention, the heater may be a carbon heater. When the heater is the carbon heater, the equipment cost can be reduced further.

## Brief Description of the Drawings

Fig. 1 is a schematic block diagram showing the drawing method and drawing apparatus of optical fiber according to the first embodiment of the present invention.
Fig. 2 is a schematic block diagram showing the drawing method and drawing apparatus of optical fiber according to the second embodiment of the present invention.
Fig. 3 is a chart showing a relation between surface temperature of optical fiber preform and Rayleigh scattering coefficient.

## Best Mode for Carrying out the Invention

The drawing methods and drawing apparatus of optical fiber according to the embodiments of the present invention will be described below with reference to the drawings. Throughout the description of the drawings the same elements will be denoted by the same reference symbols and redundant description will be omitted.

(First Embodiment)

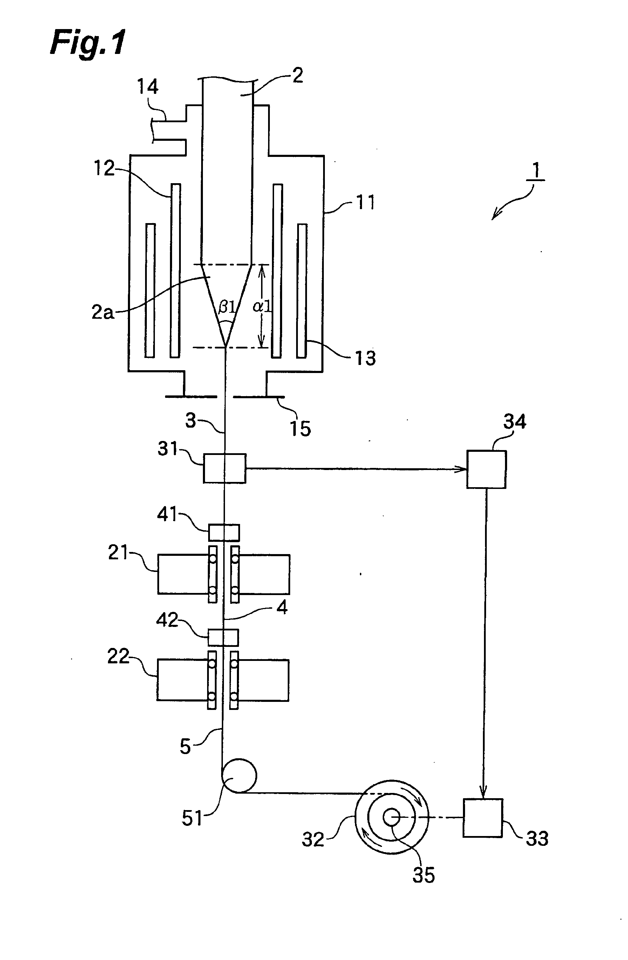

First, the first embodiment of the drawing method and drawing apparatus of optical fiber according to the present invention will be described below with reference to Fig. 1.

The drawing apparatus 1 is an apparatus for drawing a quartz based optical fiber and has a drawing furnace 11, a primary coating resin curing section 21, and a secondary coating resin curing section 22. The drawing furnace 11, primary coating resin curing section 21, and secondary coating resin curing section 22 are arranged in the order of the drawing furnace 11, primary coating resin curing section 21, and secondary coating resin curing section 22 along the drawing direction of the optical fiber preform 2, i.e., along the longitudinal direction of the preform 2. The drawing furnace 11 has a muffle tube 12 into which the preform 2 is supplied. A carbon heater 13 is disposed around the outer periphery of the muffle tube 12 so as to surround the muffle tube 12. The diameter of the preform 2 is 35 mm. The diameter of the inner periphery of the muffle tube 12 is 46 mm.

The preform 2 is held by a preform feeding device (not illustrated) and is supplied into the muffle tube 12 of the drawing furnace 11. The carbon heater 13 heats the lower end of the preform 2 and the optical fiber 3 is drawn therefrom. An inert gas supply line 14 from an inert gas (e.g., $N_2$ gas) supply (not shown) is coupled to the drawing furnace 11, and the interior of the drawing furnace 11 is kept in an inert gas atmosphere.

The carbon heater 13 is set so that the length of a heating portion thereof in the drawing direction is not less than eight times the diameter of the preform 2. Since the diameter of the inner periphery of the muffle tube 12 is smaller than the diameter of the preform 2, the length of the heating portion becomes not less than six times the diameter of the inner periphery of the muffle tube 12. In this first embodiment, the length of the heating portion of the carbon heater 13 in the drawing direction is set to 500 mm. This carbon heater 13 generates heat while supplied power thereto is controlled so that the temperature of the muffle tube 12 of the drawing furnace 11 becomes below 1800°C.

The control of supplied power to the carbon heater 13 is executed as follows. First, the carbon heater 13 is energized prior to actual drawing of the preform 2, and temperatures of the muffle tube 12 of the drawing furnace 11 are measured with a radiation thermometer or the like, to preliminarily obtain a power value at which the temperature of the muffle tube 12 of the drawing furnace 11 becomes below 1800°C. During the actual drawing of the preform 2 thereafter, the supplied power to the carbon heater 13 is controlled to the predetermined power value. In the first embodiment, the temperature of the muffle tube 11 indicates a surface temperature on the inner peripheral surface of the muffle tube (the surface facing the surface of the preform 2 or the optical fiber 3).

When the supplied power to the carbon heater 13 is controlled so that the temperature of the muffle tube 12 of the drawing furnace 11 becomes below 1800°C (e.g., 1600°C) in this way, the maximum temperature becomes below 1800°C on the surface of the preform 2 in the drawing furnace 11.

The preform 2 in the drawing furnace 11 is heated into the molten state by the carbon heater 13 and is pulled to form a meniscus portion 2a. A length $\alpha1$ of the meniscus portion 2a in the drawing direction of the preform 2 becomes not less than 76 mm (about 150 mm in the first embodiment) and a taper angle $\beta1$ thereof becomes not more than 19° (about 9.6° in the first embodiment). Here $\alpha1$ and $\beta1$ are defined by the following equations.

$$\alpha1 = X1 - X2 \tag{2}$$

$$\beta1 = 2\tan^{-1}\{Y(0.45 - 0.1)/(X1 - X2)\} \tag{3}$$

Y: outside diameter of the optical fiber preform (mm)
X1: longitudinal position (mm) where the outside diameter is $Y \times 0.9$
X2: longitudinal position (mm) where the outside diameter is $Y \times 0.2$

The origin of X (the position of 0 mm) is defined at the longitudinal position of the lowermost end of the carbon heater and the positive direction is set upward (in the opposite direction to the direction of gravity) from the origin.

The optical fiber 3 outgoing from a shutter portion 15 of the drawing furnace 11 is subjected to on-line measurement of the outside diameter by an outside diameter gauge 31 as an outside diameter measuring means, and measured values of outside diameter are fed back to a driving motor 33 for rotating a drum 32, whereby the outside diameter is controlled so as to become a constant value (for example, a optical fiber glass outside diameter of 125 μm). Output signals from the outside diameter gauge 31 are sent to a control unit 34 as a control means and a rotational speed of the drum 32 (driving motor 33) is calculated so that the outside diameter of the optical fiber 3 becomes the preset value. The control unit 34 outputs an output signal indicating the thus calculated rotational speed of the drum 32 (driving motor 33) to a driver for the driving motor (not shown) and this driving motor driver controls the rotational speed of the driving motor 33, based on the output signal from the control unit 34.

After that, the optical fiber 3 is coated with a primary coating UV resin through a coating die 41 and the primary coating UV resin is cured by a UV lamp in the primary coating resin curing section 21, thereby forming a primary coated optical fiber 4. After that, the primary coated optical fiber 4 is coated with a secondary coating UV resin through a coating die 42 and the secondary coating UV resin is cured by a UV lamp in the secondary coating resin curing section 22, thereby forming a secondary coated optical fiber (coated optical fiber) 5. Then the secondary coated optical fiber 5 is wound up via a guide roller 51 on the drum 32. The drum 32 is supported on a rotational drive shaft 35 and an end of this rotational drive shaft 35 is coupled to the driving motor 33.

Described below are the results of experiments conducted using the drawing apparatus 1 described above as the first embodiment. Common conditions to these experiments are as follows. The preform 2 was a silica glass preform for single-mode fiber having the diameter of $\phi 36$ mm, the core part of Ge-doped silica glass, and the cladding part of pure silica glass. The optical fiber 3 having the outside diameter of 125 $\mu$m was drawn from this optical fiber preform 2 by the drawing apparatus 1. In all Example 1, Example 2, and Comparative Example 1, $N_2$ gas was used as the inert gas.

Example 1 and Example 2 are experiment examples by the drawing method and drawing apparatus of optical fiber according to the first embodiment, while Comparative Example 1 is a comparative experiment example for comparison with the examples by the drawing method and drawing apparatus of optical fiber according to the first embodiment described above.

(Example 1)

The drawing speed was set at 100 m/min, the drawing tension at 100 gf, and the feed of $N_2$ gas at 3 liter/min, respectively. The carbon heater 13 was energized so that the temperature of the muffle tube of the drawing furnace 11 became 1600°C, and the preform 2 was drawn in a state in which the temperature of the muffle tube of the drawing furnace 11 was kept at 1600°C. The length of the heating portion of the carbon heater 13 in the drawing direction was 500 mm. The length of the muffle tube 12 in the drawing direction was 600 mm. In this setting, the length $\alpha 1$ of the meniscus portion 2a in the drawing direction of the preform 2 was approximately 150 mm and the taper angle $\beta 1$ was approximately 9.6° .

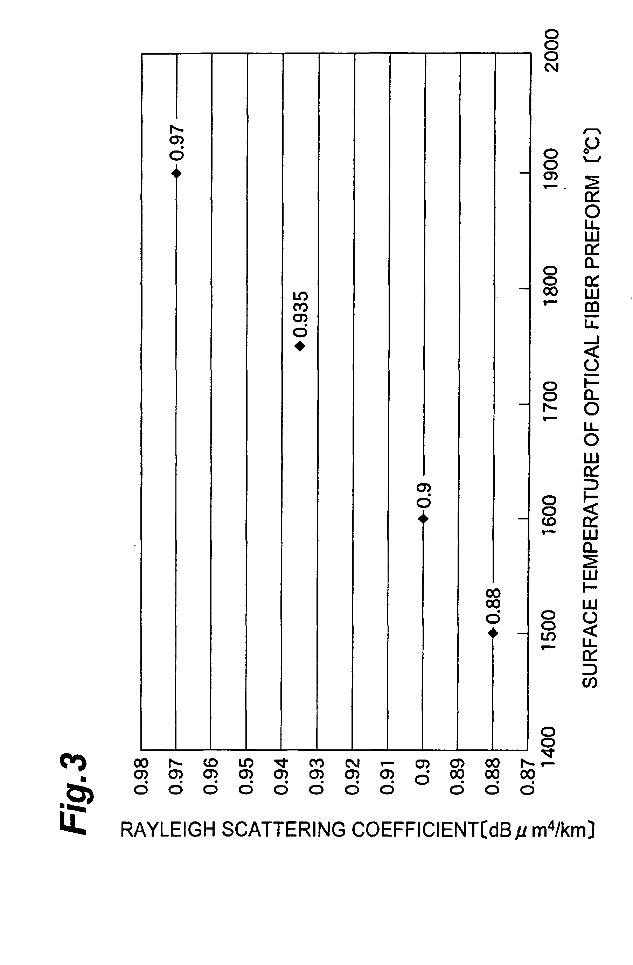

The Rayleigh scattering coefficient determined from the wavelength loss characteristics of the optical fiber 3 drawn was 0.90 dB$\mu$m$^4$/km, as shown in Fig. 3.

(Example 2)

The drawing speed was set at 100 m/min, the drawing tension at 100 gf, and the feed of $N_2$ gas at 3 liter/min, respectively. The carbon heater 13 was energized so that the temperature of the muffle tube of the drawing furnace 11 became 1750°C, and the preform 2 was drawn in a state in which the temperature of the muffle tube of the drawing furnace 11 was kept at 1750°C. The length of the carbon heater 13 in the drawing direction was 350 mm. The length of the muffle tube 12 in the drawing direction was set to 420 mm. In this setting, the length $\alpha 1$ of the meniscus portion 2a in the drawing direction of the preform 2 was approximately 106 mm and the taper angle $\beta 1$ was approximately 13°.

The Rayleigh scattering coefficient determined from the wavelength loss characteristics of the optical fiber 3 drawn was 0.935 dB$\mu$m$^4$/km, as shown in Fig. 3.

(Comparative Example 1)

The drawing speed was set at 100 m/min, the drawing tension at 100 gf, and the feed of $N_2$ gas at 3 liter/min, respectively. The carbon heater was energized so that the temperature of the muffle tube of the drawing furnace 11 became 1900°C, and the preform 2 was drawn in a state in which the temperature of the muffle tube of the drawing furnace 11 was kept at 1900°C. The length of the carbon heater in the drawing direction was set to 100 mm. The length of the muffle tube 12 in the drawing direction was 120 mm. In this setting, the length $\alpha 1$ of the meniscus portion 2a in the drawing direction of the preform 2 was approximately 50 mm and the taper angle $\beta 1$ was approximately 29° .

The Rayleigh scattering coefficient determined from the wavelength loss characteristics of the optical fiber 3 drawn was 0.97 dB$\mu$m$^4$/km, as shown in Fig. 3.

As described above, the Rayleigh scattering coefficient was 0.90 dB $\mu$m$^4$/km and 0.935 dB $\mu$m$^4$/km in Example 1 and Example 2 and, therefore, the Rayleigh scattering coefficient was able to be reduced as compared with 0.97 dB $\mu$m$^4$/km in Comparative Example 1.

As also apparent from the above-stated experiment results, in the drawing apparatus and drawing method of optical fiber according to the first embodiment, as described above, the drawing furnace 11 has the carbon heater 13 the length of the heating portion of which in the drawing direction is not less than eight times the diameter of the preform 2 (or not less than six times the diameter of the inner periphery of the muffle tube 12), and this carbon heater 13 generates heat so that the temperature of the muffle tube 12 of the drawing furnace 11 becomes below 1800°C. At this time the preform 2 is heated by the heat from the carbon heater 13 to be pulled so that the taper angle $\beta 1$ of the meniscus portion 2a of the preform 2 becomes not more than 19° .

When the preform 2 is drawn in the state in which the temperature of the muffle tube 12 of the drawing furnace 11 is kept below 1800°C in this way, the maximum temperature on the surface of the preform 2 during drawing is reduced to below 1800°C lower than that in the prior art, so that the atomic arrangement in the preform 2 is brought into the relatively aligned state with reduced randomness of atomic arrangement. Accordingly, the optical fiber 3 drawn by pulling the preform 2 reflects the reduced randomness state of atomic arrangement, and thus the optical fiber 3 is obtained with reduced Rayleigh scattering intensity and lowered transmission loss. As a consequence, since the Rayleigh scattering intensity is reduced by controlling the temperature of the preform 2 during drawing, there is no need for the reheating step with the heating furnace as employed in the aforementioned prior art, whereby the optical fiber 3 with lowered transmission loss can be obtained without a rise of equipment cost of the drawing apparatus 1 and in a simple manner.

Since the length of the heating portion of the carbon heater 13 in the drawing direction is not less than eight times the diameter of the preform 2 (or not less than six times the diameter of the inner periphery of the muffle tube 12), the temperature of the preform 2 during drawing is lowered to below 1800°C, so that the preform 2 can be readily drawn into the desired diameter of the optical fiber 3 (e.g., the outside diameter of 125 $\mu$m) even in the high viscosity state of the preform 2.

Since the carbon heater 13 is used as a heater in the drawing furnace 11, the equipment cost of the drawing apparatus 1 can be reduced further.

(Second Embodiment)

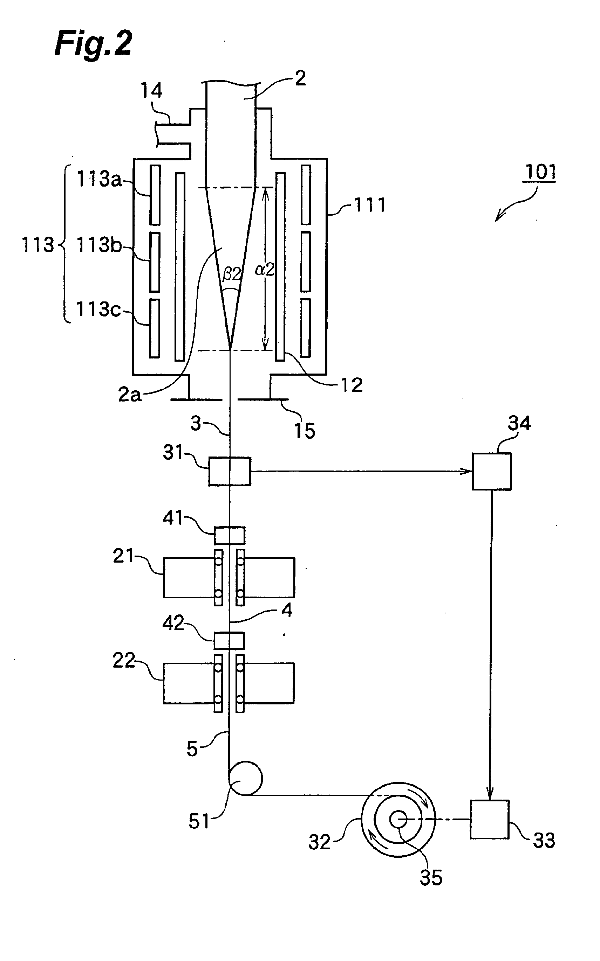

The second embodiment of the drawing apparatus and drawing method of optical fiber according to the present invention will be described below with reference to Fig. 2. The second embodiment is different from the first embodiment in the structure of the carbon heater disposed in the drawing furnace.

The drawing apparatus 101 is an apparatus for drawing a quartz based optical fiber and has the drawing furnace 111, the primary coating resin curing section 21, and the secondary coating resin curing section 22. The drawing furnace 111, primary coating resin curing section 21, and secondary coating resin curing section 22 are arranged in the order of the drawing furnace 111, primary coating resin curing section 21, and secondary coating resin curing section 22, along the drawing direction of the preform 2, i.e., along the longitudinal direction of the preform 2. The drawing furnace 111 has the muffle tube 12 into which the preform 2 is supplied. The carbon heater 113 is disposed around the outer periphery of the muffle tube 12 so as to surround the muffle tube 12.

The preform 2 is held by the preform feeding device (not shown) and is supplied into the muffle tube 12 of the drawing furnace 11. The carbon heater 13 heats the lower end of the preform 2 and the optical fiber 3 is drawn therefrom.

The carbon heater 113 includes a first carbon heater 113a, a second carbon heater 113b, and a third carbon heater 113c. The first carbon heater 113a, the second carbon heater 113b, and the third carbon heater 113c are arranged in three-stage arrangement in series in the order of the first carbon heater 113a, second carbon heater 113b, and third carbon heater 113c along the drawing direction of the preform 2 (i.e., along the vertical direction in Fig 2). For each of the first carbon heater 113a, the second carbon heater 113b, and the third carbon heater 113c, the length of a heating portion in the drawing direction is set to 250 mm and the total length of the heating portions of the carbon heater 113 in the drawing direction is the length of about 750 mm.

The carbon heater 113 (first carbon heater 113a, second carbon heater 113b, and third carbon heater 113c) generates heat while the supplied power thereto is controlled so that the temperature of the muffle tube 12 of the drawing furnace 11 becomes below 1800°C (e.g., 1500°C), as in the first embodiment. In the carbon heater 113, temperatures of the first carbon heater 113a and the third carbon heater 113c located on the both sides in the drawing direction are set higher than a temperature of the second carbon heater 113b in consideration of leakage of heat in order to make temperature distribution uniform in the drawing direction of the muffle tube 12. In this second embodiment, the temperature of the muffle tube 11 indicates the surface temperature on the inner peripheral surface of the muffle tube (the surface facing the surface of the preform 2 or the optical fiber 3).

The preform 2 in the drawing furnace 111 is heated into the molten state by the carbon heater 13 to form the meniscus portion 2a. The length $\alpha$2 of this meniscus portion 2a in the longitudinal direction of the preform 2 becomes approximately 200 mm and the taper angle $\beta$2 thereof about 7.2°. Here $\alpha$2 and $\beta$2 are defined by the following equations.

$$\alpha 2 = X1 - X2 \qquad (2)$$

$$\beta 2 = 2\tan^{-1}\{Y(0.45 - 0.1)/(X1 - X2)\} \qquad (3)$$

Y: outside diameter of the optical fiber preform (mm)
X1: longitudinal position (mm) where the outside diameter is $Y \times 0.9$
X2: longitudinal position (mm) where the outside diameter is $Y \times 0.2$

The origin of X (the position of 0 mm) is defined at the longitudinal position of the lowermost end of the carbon heater and the positive direction is set upward (in the opposite direction to the direction of gravity) from the origin.

Described below is the result of experiments conducted using the drawing apparatus 101 of the second embodiment. In these experiments, as in Example 1, Example 2, and Comparative Example 1, the preform 2 was a silica glass preform for single-mode fiber having the diameter of $\phi$36 mm, the core part of Ge-doped silica glass, and the cladding part of pure silica glass. The optical fiber 3 having the outside diameter of 125 $\mu$m was drawn from this preform 2. N$_2$ gas was used as the inert gas.

Example 3 is an experiment example by the drawing method and drawing apparatus of optical fiber according to the second embodiment.

(Example 3)

The drawing speed was set at 100 m/min, the drawing tension at 100 gf, and the feed of $N_2$ gas at 3 liter/min, respectively. The carbon heater 113 was energized so that the temperature of the muffle tube of the drawing furnace 111 became 1500°C, and the preform 2 was drawn in a state in which the temperature of the muffle tube of the drawing furnace 111 was kept at 1500°C. The length of the heating portions of the carbon heater 13 in the drawing direction was 750 mm. The length of the muffle tube 12 in the drawing direction was 900 mm. In this setting, the length $\alpha 1$ of the meniscus portion 2a in the drawing direction of the preform 2 was approximately 200 mm and the taper angle $\beta 1$ was approximately 7.2°.

The Rayleigh scattering coefficient determined from the wavelength loss characteristics of the optical fiber 3 drawn was 0.88 dB $\mu m^4$/km, as shown in Fig. 3.

As described above, the Rayleigh scattering coefficient was 0.88 dB $\mu m^4$/km in Example 3, so that the Rayleigh scattering coefficient was able to be largely reduced as compared with the Rayleigh scattering coefficient of 0.97 dB $\mu m^4$/km in Comparative Example 1.

As also apparent from the experiment result, in the drawing apparatus and drawing method of optical fiber according to the second embodiment, as in the first embodiment, the maximum temperature on the surface of the preform 2 during drawing is reduced to below 1800°C lower than that in the prior art and the atomic arrangement in the preform 2 becomes relatively aligned in the state of reduced randomness of atomic arrangement, as described above. Accordingly, the optical fiber 3 drawn by pulling the preform 2 reflects this reduced randomness state of atomic arrangement, so that the optical fiber 3 can be obtained with reduced Rayleigh scattering intensity and lowered transmission loss. As a consequence, since the Rayleigh scattering intensity is reduced by controlling the temperature of the preform 2 during drawing, there is no need for the reheating step with the heating furnace as employed in the aforementioned prior art, whereby the optical fiber 3 with lowered transmission loss can be obtained without a rise of equipment cost of the drawing apparatus 101 and in a simple manner.

Since the temperature of the preform 2 during drawing is lowered to below 1800°C as in the first embodiment, the preform 2 can be readily drawn into the desired diameter of the optical fiber 3 (e.g., the glas outside diameter of 125 $\mu m$) even in the high viscosity state of the preform 2.

Since the carbon heater 113 includes the first carbon heater 113a, second carbon heater 113b, and third carbon heater 113c arranged in series along the drawing direction, the heating range of the preform 2 can be readily expanded.

In Experiment Example 1 to Experiment Example 3 the preform 2 employed was the silica glass preform for single-mode fiber having the core part of Ge-doped silica glass and the cladding part of pure silica glass, but, besides it, the optical fiber with reduced transmission loss can be also produced from other optical fiber preforms for long-haul transmission, e.g., an optical fiber preform having the core part of pure silica glass and the cladding part of F-doped glass, a quartz fiber preform having a complex index profile by doping of Ge and F, and so on.

The first and second embodiments employed the drawing furnace 11, 111 having the carbon heater 13, 113, but the drawing furnace may be either of other types, such as an induction heating zirconia furnace or the like.

In the second embodiment the carbon heater 113 was the serial carbon heaters in the three-stage arrangement (the first carbon heater 113a, second carbon heater 113b, and third carbon heater 113c), but the carbon heater may be serial carbon heaters arranged in two-stage, or four or more-stage arrangement.

**Industrial Applicability**

The drawing methods and drawing apparatus of optical fiber according to the present invention can be utilized as drawing methods and drawing apparatus for quartz based optical fibers.

**Claims**

1. A fiber drawing method of heating and drawing an optical fiber preform by making use of a drawing furnace comprising a muffle tube into which said optical fiber preform is supplied,
   wherein said optical fiber preform is drawn in a state in which a temperature of said muffle tube is kept below 1800°C.

2. The fiber drawing method according to Claim 1, wherein said optical fiber preform is drawn, using as said drawing furnace a drawing furnace comprising a heater a length of a heating portion of which in a drawing direction is not less than eight times a diameter of said optical fiber preform.

3. A fiber drawing method of heating and drawing an optical fiber preform by making use of a drawing furnace,
   wherein said optical fiber preform is drawn so that in said drawing furnace a taper angle of a meniscus portion of said optical fiber preform becomes not more than 19°.

4. A fiber drawing apparatus comprising a drawing furnace for heating and drawing an optical fiber preform,

wherein said drawing furnace comprises:

a muffle tube into which said optical fiber preform is supplied; and
a heater disposed around an outer periphery of said muffle tube and arranged to heat a predetermined longitudinal range of said optical fiber preform, and

wherein a length of a heating portion of said heater in a drawing direction is not less than six times a diameter of an inner periphery of said muffle tube.

5. The fiber drawing apparatus according to Claim 4, wherein said heater includes a plurality of heaters arranged in series along the drawing direction, and
wherein the sum of lengths of heating portions of said plurality of heaters in said drawing direction is not less than six times the diameter of the inner periphery of said muffle tube.

6. The fiber drawing apparatus according to Claim 4, wherein said heater is a carbon heater.

*Fig.1*

*Fig.2*

**_Fig.3_**

EP 1 211 228 A1

EP 1 211 228 A1

| INTERNATIONAL SEARCH REPORT | International application No. |
|---|---|
| | PCT/JP00/04353 |

A. CLASSIFICATION OF SUBJECT MATTER
    Int.Cl⁷   C03B37/027
              C03B37/029

According to International Patent Classification (IPC) or to both national classification and IPC

B. FIELDS SEARCHED

Minimum documentation searched (classification system followed by classification symbols)
    Int.Cl⁷   C03B37/027
              C03B37/029

Documentation searched other than minimum documentation to the extent that such documents are included in the fields searched
    Jitsuyo Shinan Koho          1926-1996    Toroku Jitsuyo Shinan Koho  1994-2000
    Kokai Jitsuyo Shinan Koho    1971-2000    Jitsuyo Shinan Toroku Koho  1996-2000

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP, 10-218635, A (Nippon Telegr. & Teleph. Corp. <NTT>), 18 August, 1998 (18.08.98), Par. Nos. [0003] to [0006], [0012]   (Family: none) | 1-6 |
| A | JP, 10-25127, A (Nippon Telegr. & Teleph. Corp. <NTT>), 27 January, 1998 (27.01.98), Par. Nos. [0003] to [0021]   (Family: none) | 1-6 |
| X | JP, 2-172840, A (The Furukawa Electric Co., Ltd.), 04 July, 1990 (04.07.90), page 2, lower right column, lines 11 to 18   (Family: none) | 3 |
| X | JP, 2-164738, A (The Furukawa Electric Co., Ltd.), 25 June, 1990 (25.06.90), Claims; Fig. 4   (Family: none) | 3 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 August, 2000 (17.08.00) | 29 August, 2000 (29.08.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

12

## INTERNATIONAL SEARCH REPORT

| International application No. |
|---|
| PCT/JP00/04353 |

**Box I    Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

    Although claims 1, 3, and 4 are independent claims, they only share as a common inventive concept a known method or device for heat-drawing an optical fiber preform in the technical field, and therefore have no integrated, novel inventive concept common to all these independent claims.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☐  The additional search fees were accompanied by the applicant's protest.

　　　　　　　　　　　　☐  No protest accompanied the payment of additional search fees.

Form PCT/ISA/210 (continuation of first sheet (1)) (July 1992)